Europäisches Patentamt

European Patent Office

Office européen des brevets

(11) Publication number: **0 223 516**
**A2**

# EUROPEAN PATENT APPLICATION

(21) Application number: **86308671.6**

(22) Date of filing: **06.11.86**

(51) Int. Cl.⁴: **H02K 29/08**

(30) Priority: **06.11.85 GB 8527319**

(43) Date of publication of application:
**27.05.87 Bulletin 87/22**

(84) Designated Contracting States:
**AT BE CH DE ES FR GB GR IT LI LU NL SE**

(71) Applicant: **MAGHEMITE INC.**
**2275 Speakman Drive Unit 2**
**Mississauga Ontario L5K 1B1(CA)**

(72) Inventor: **Cavanagh, Patrick Edward**
**606 Avenue Road**
**Toronto Ontario, M4V 2K9(CA)**

(74) Representative: **Muir, Ian R. et al**
**HASELTINE LAKE & CO. Hazlitt House 28**
**Southampton Buildings Chancery Lane**
**London WC2A 1AT(GB)**

(54) **Magnetronic motor.**

(57) A magnetronic motor (10) utilizing stator-mounted coils (16) and rotor-mounted magnets (26) is described. The coils (16) are mounted in parallel by electrical connection to a pair of upper and lower disks (18, 20) of electrically-conducting material. The coils (16) are arranged in concentric circles and radial arrays. The coils (16) are cylindrical and have their axes parallel to each other and to the axis of the disks (18, 20). The magnets (26) are also arranged in concentric circles and radial arrays. A single rotor (22) or a pair of rotors (22, 24) may be provided. Magnetically-activated devices, such as Hall switches (12,14), are associated with the coils so as to activate and deactivate the coils (16) and to reverse the polarity.

FIG.4.

## MAGNETRONIC MOTOR

### FIELD OF INVENTION

The present invention relates to the control of motors.

### BACKGROUND OF THE INVENTION

The feasibility of using electronic components, such as transistor switches, to control and to provide power to permanent magnet motors is a practical alternative to the use of mechanical commutators. The feasibility of doing so, however, is greatly influenced by the cost of components that are to carry heavy currents. At the present time, the cost of electronic switches is almost directly proportional to their current carrying capacity and is currently about $1.00 per ampere.

For the range of fractional horsepower motors, the required current-carrying capacity may vary from a fraction of an ampere up to momentary values as large as 100 amperes. When trying to design a motor of one h.p. to sell for say, $30 or $40, the price of a 50-ampere capacity transistor switch at about $50 is not feasible.

This situation may be circumvented by paralleling the electronic circuits and coils in the motor. However, multiple parallel circuits in a multiple-pole motor lead to a very high number of necessary electrical connections.

### SUMMARY OF INVENTION

In accordance with the present invention, this difficulty is overcome by providing multiple parallel circuits connected simply to two conducting metal plates, which act as bus bars for conducting electrical power to the multiple parallel circuits. In this way, the desired parallel circuitry is provided in a much simplified manner.

A magnetically-activated switch is used as a current-carrying device supplying power to a coil with sufficient ampere turns to develop a usable magnetic field at very low current levels. As an example, a Hall-effect switch which operates at a current level of 0.5 amperes is placed in series with a coil that develops a usable magnetic field of 500 oersteds. The coil then requires 1000 turns to provide 500 ampere turns and the usable magnetic field of 500 oersteds. The combined resistance of the Hall switch and coil is required to be 24 ohms in order to provide a current of 0.5 amperes from a 12-volt source.

A "Hall switch" is an iodide crystal which, when biased at 12 volts, becomes a conductor when placed in a magnetic field. A typical commercially-available switch uses a 12-volt bias, carries 0.500 amperes, turns on in a magnetic field of 600 gauss and turns off in a magnetic field of 200 gauss.

The stator coils used in this invention preferably are of small dimension, preferably less than one inch long and less than half an inch in diameter. So-called "inductors" and "radio chokes" are readily available with the necessary dimensions and required characteristics.

The small cylindrical coils, each with its attendant Hall switch or switches, are placed between two electrically-conducting sheets of metal, which can be connected readily to a 12-volt power source. This assembly may be used to provide the stator element for a magnetronic motor.

Gold is the preferred material for the conducting sheets, although copper or other electrically-conducting material may be employed.

### BRIEF DESCRIPTION OF DRAWINGS

Figures 1 and 2 illustrate a radial section through a double rotor motor unit constructed in accordance with the invention at two stages of rotation of the permanent magnet rotor;

Figure 3 is a circumferential section through the double rotor unit of Figures 1 and 2 illustrating varying stages of rotation of the permanent magnet pole;

Figure 4 illustrates a circumferential section through a single rotor unit constructed in accordance with the invention;

Figure 5 illustrates a circumferential section through a single rotor unit constructed in accordance with a preferred embodiment of the invention;

Figures 6 and 7 illustrate rotor and stator arrangements useful in providing a magnetronic motor in accordance with the invention; and

Figure 8 is a graphical representation illustrating the magnetic performance of the small coils with changing wire size.

### DESCRIPTION OF PREFERRED EMBODIMENT

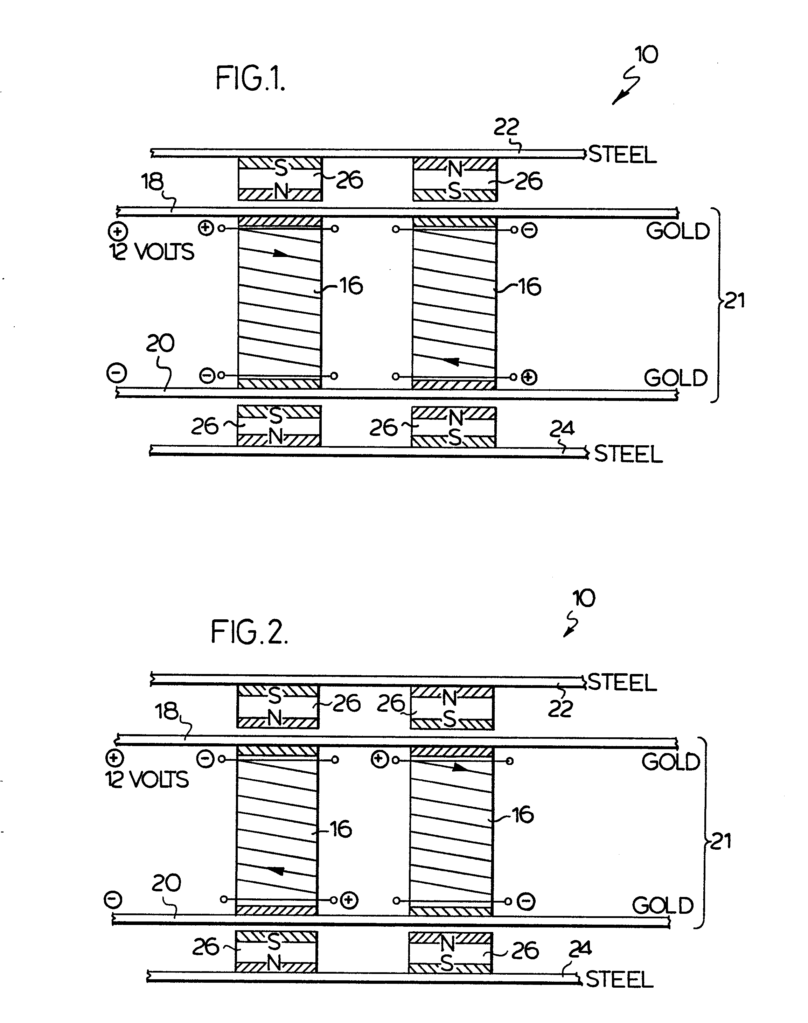

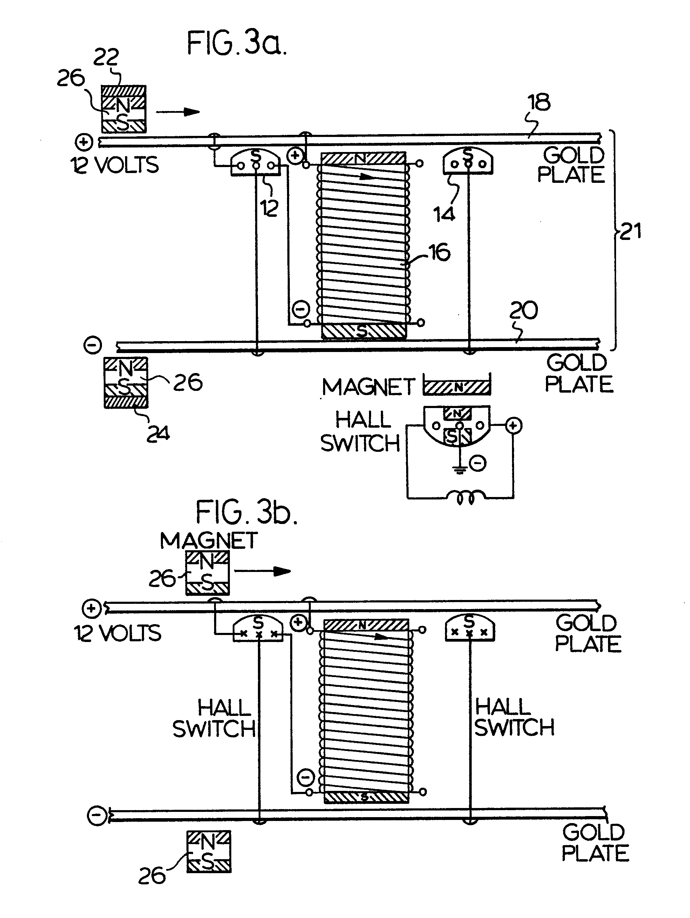

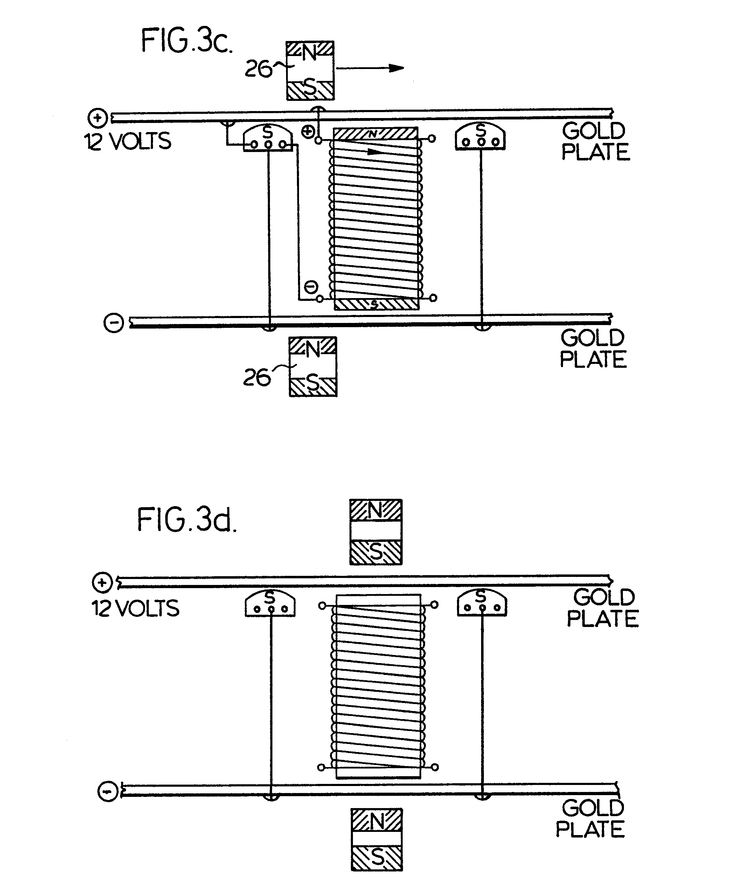

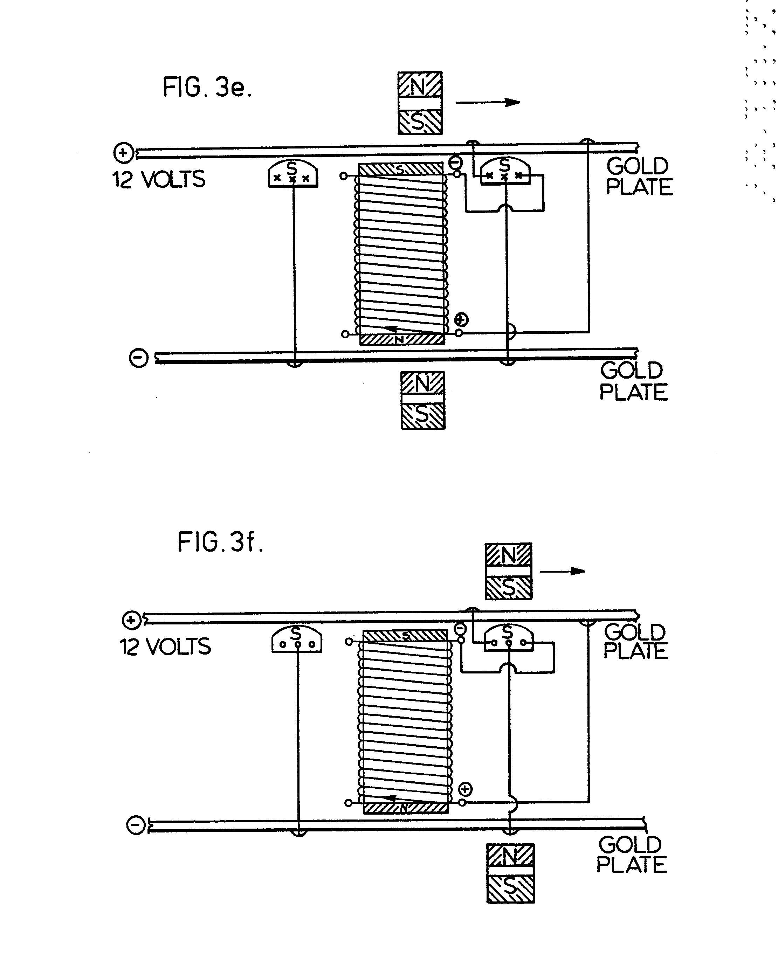

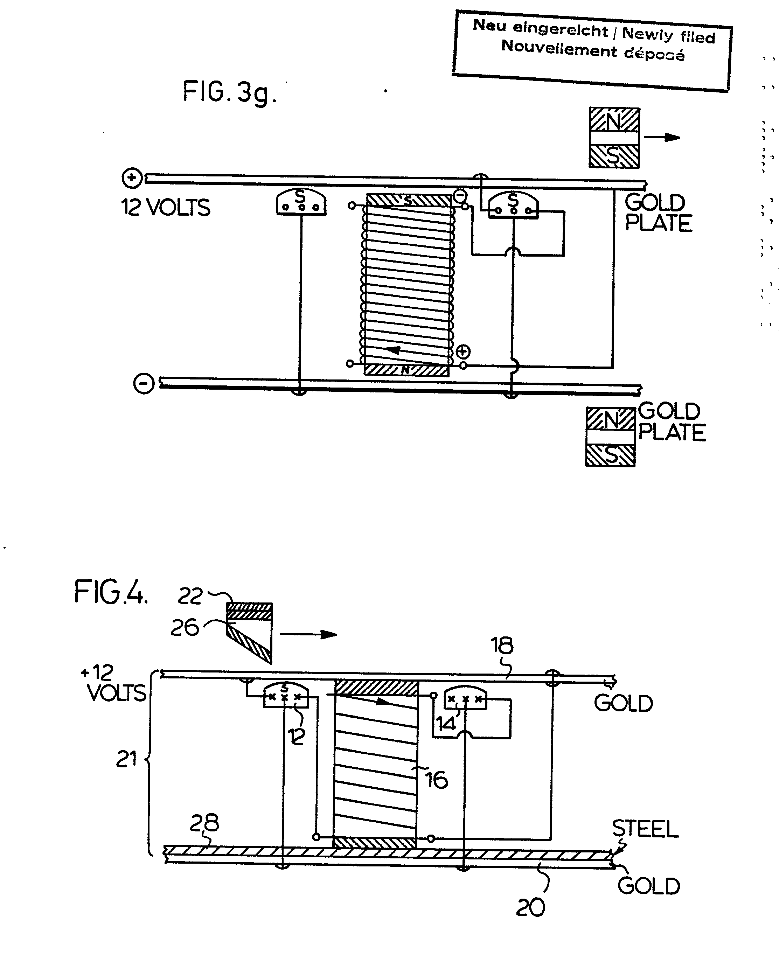

Referring to the drawings, Figures 1 and 2 illustrate the magnetic circuit of one radial section of a double-rotor magnetronic motor 10. Figure 3 is the corresponding circumferential section of the magnetronic motor 10. In the illustrated embodiment, two Hall switches 12 and 14 are provided electrically-connected to each coil 16 (see Figure 3). The Hall switches 12 and 14 are provided one on each circumferential side of each coil 16. The coils 16 are mounted in axially-parallel relation between a pair of gold plates 18, 20, which function as bus bars connected to a source of d.c. power. Each of the coils 16 is connected to the plates 18, 20 through its associated Hall switches 12, 14 as shown in Figure 3. The arrangement of the coils 16 and plates 18 and 20 constitutes the stator 21 of the motor 10.

A pair of rotors 22, 24 is mounted for rotation adjacent the exterior of the gold plates 18, 20 and each of the rotors 22, 24 carries permanent magnets 26 for rotation therewith. The rotors 22, 24 typically are radially-extending steel arms on which the permanent magnets 26 are mounted or radially-extending lines of magnets mounted on a circular plate of steel. The coils 16 are arranged in a circle or in a series of concentric circles about a central axis and the magnets 26 similarly are arranged in a circle or in a series of concentric circles on a series of rotor arms 22, 24 which rotate about the same central axis to align the magnets 26 with the coils 16. The permanent magnets are arranged with alternate exposed north and south poles radially in each rotor 22, 24. Preferably, there are a greater number of permanent magnets 26 than coils 16 in the overall structure, to provide for self-starting of the motor.

If four pairs of coils 16 are provided in each of the four arms of the stator, then four pairs of magnets are required in each of the six arms of the rotor. If the number of radial arms of rotor magnets similarly needs to be doubled, then providing a stator with eight arms and a rotor with twelve arms. This interrelationship of numbers of coils and magnets is required to be maintained for all arrangements of stator and rotor units. The ratio can be reversed, if desired.

Figure 1 illustrates the polarity relationship between the coils 16 and the permanent magnets 26 at the commencement of the repulsion phase. The poles of the magnets 26 and those of the coils 16 are the same, thereby causing the repulsion.

Figure 2 illustrates the polarity relationship between the coils and the permanent magnets 26 during the attraction phase. In this case, the poles of the magnets 26 and of the coils are opposite, thereby causing the attraction. The polarity of the coils 16 then is reversed to bring about the condition of Figure 1.

The sequence of operations as one magnet 26 passes one coil 16 is illustrated in the circumferential sectional views of Figures 3a to 3g. It will be understood that this sequence is repeated around the whole circle of coils 16 and magnets 26.

As the opposed pair of magnets 26 approach the coil 16, the exposed poles of the pair of magnets 26 are opposite to each other. As the magnet 26 approaches the coil 16, the near side Hall switch 12 is turned on. The resulting current in the coil 16 generates an attracting pole at each end for the magnets 26.

In Figure 1, the magnetic circuit is established from one upper rotor magnet, through the steel rotor plate 22, to the radially adjacent magnet 26 with opposite polarity, then through the coil 16 to the lower rotor magnet 26 of opposite polarity, through the steel rotor disc 24 to the fourth rotor magnet 26, and through the second coil 16 of the pair in the set, to the first rotor magnet 26 of the set of four magnets, thus completing this magnetic circuit.

This paired magnetic circuit is repeated circumferentially in the array of steel rotor 18. Circumferential sections through a single coil of a radial pair are shown in Figures 3.

The attractive force is maintained until the end of the attraction phase, whereupon the field of the rotating magnet 26 has fallen to a low enough level so that the first Hall switch 12 turns off (see Figure 3(d)). The magnetic field from the rotor magnet 26 then switches on the off-side Hall switch 14, which reverses the polarity in the coil 16 from that in the attraction phase, thereby initiating the repulsion phase under the influence of repulsion between the poles. In this way, rotary motion of the rotors 22 and 24 is induced and maintained.

The spacing of the Hall switches 12 and 14 from the coils 16, the size of the permanent magnets 26 and the relative proportions of coil 16, magnet 26 and Hall switches 12 and 14 are governed by the above description of the manner of operation of the motor, and may be optimized for any particular configuration. The magnetic circuit in the motor of Figures 1 to 3 is radial.

Referring now to Figure 4, the same reference numerals have been used for the same elements as are illustrated in Figures 1 to 3. Only a single rotor 22 is employed. In this arrangement, the magnetic circuit is completed through a steel sheet 28 rather than by the second rotor 24 in Figures 1 to 3. In addition, in the embodiment of Figure 4, the permanent magnets 26 are shaped, as seen, so that the magnetic field detected by the Hall switches 12 and 14 falls off more quickly to the turn-off level.

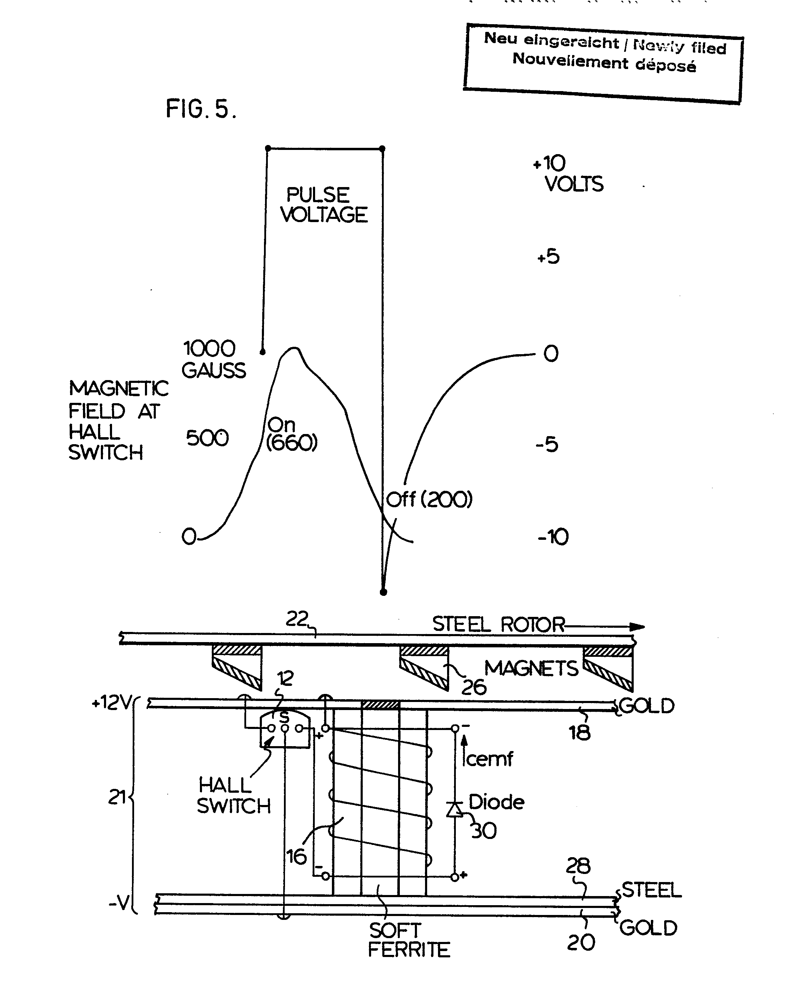

Referring now to Figure 5, there is shown therein a preferred embodiment of a single rotor motor according to the invention. The same reference numerals are employed to designate the same elements as are designated in Figures 1 to 4.

In this embodiment, the permanent magnets 26 are again shaped or tapered, as in Figure 4. Only a single Hall switch 12 is used and the transient counter emf is employed to generate a repulsing field through diode 30 when the Hall switch 12 turns off, rather than a second Hall switch. The next Hall switch and coil are at the right-hand margin of the drawing, with the switch in the same relative position under the right-hand rotor magnet.

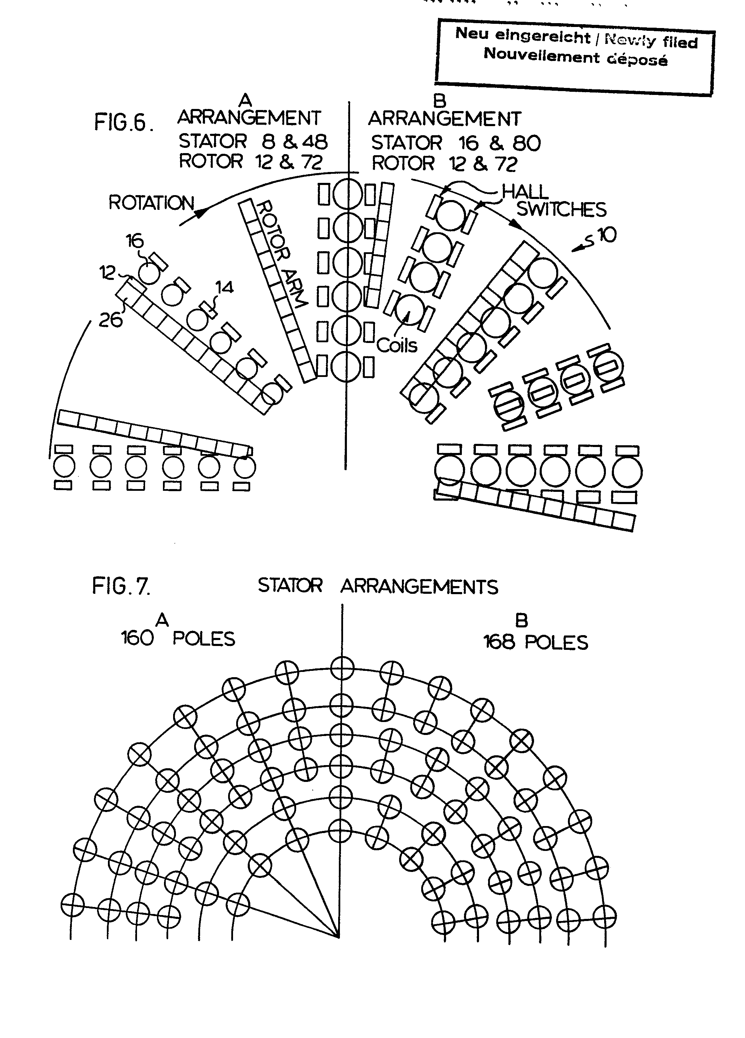

In Figure 6, there are illustrated two alternative arrangements of coils 16 and permanent magnets 26. In the left-hand portion of the drawing (A), there is illustrated the arrangement of components for one quadrant of the full circle. There are, therefore, eight radial stator arms, each containing three pairs of coils. Three rotor arms are shown, giving a total of twelve rotor arms with three pairs of permanent magnets in each rotor arm.

The coils 16 are always arranged in pairs and each magnet position on a rotor arm has the same polarity of the permanent magnet for each arm. As may be seen, three magnetic circuit units are provided on each radius of the motor 10.

OPERATION

In operation, the coils 16 on a single stator radius are activated in sequence rather than at the same time, so as to obtain a smooth and continuous torque. In addition, the greater number of rotor radii as compared to stator radii also contributes to a smooth and continuous torque.

In the right-hand position of Figure 6, sixteen stator arms and twelve rotor arms are illustrated. In the preferred embodiments, stator arms may be in quartet doubles (i.e., 4, 8, 16, 32, etc.) and rotor arms in sextet doubles (i.e. 6, 12, 24, 48, etc.), or vice versa.

The embodiment illustrated in Figure 6 shows the use of two hall switches 12 and 14 per coil to provide both an attractive and repulsive force on the rotor arm as it passes. Alternatively, a single Hall switch 12 may be employed, as shown in Figure 5.

A large flat toroid is the preferred shape for the magnetronic motor, as illustrated. The torque developed depends on the size of the unit and the number of magnetic circuit pairs employed.

Figure 7 shows alternative pole arrangements. As seen in the right-hand portion of Figure 7, the magnetic pairs may be packed more closely by offsetting the pairs in the radii.

The magnetronic motors of the invention are self-starting since, upon the initial application of power, the relationship of the permanent magnets 26 to the Hall switches 12 ensures that a coil 16 is activated somewhere in the array, thereby initiating the rotation of the rotor, through the operations described above with reference to Figures 1 to 5.

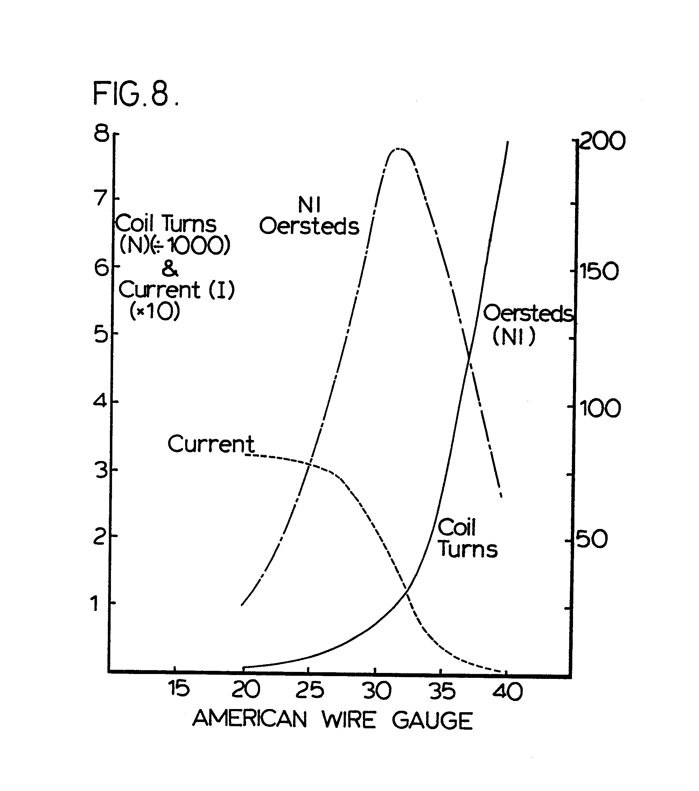

In Figure 8, there is illustrated the effect of variation of wire gauge on magnetic field in the small coils used in this invention when in parallel with two Hall switches.

SUMMARY OF ENCLOSURE

In summary of this disclosure, the present invention provides a magnetronic motor which employs a unique bus bar arrangement to achieve electrical connections with parallel connected electrical coils. Hall switches or other magnetically-activated devices in series with each coil are used to activate the coils and to reverse their polarity. Preferably, one Hall switch is employed with each coil to activate the coil in an attraction phase and the transient counter emf is employed to activate the coil in a repulsion phase. The Hall switches are activated and deactivated by the magnetic field from permanent magnets which rotate past the switches and associated coils. A radially-oriented magnetic circuit comprising a pair of coils and associated permanent magnet(s) is provided.

Specific structures have been described to put into effect the principles of the invention. Modifications of those structures are possible and are within the scope of this invention. For example, while the present invention has been described in a motor-mode of operation, where electrical power input generates output torque from the rotor, the invention also may be operated as an electricity generator, wherein input torque to the rotor generates electrical power output.

**Claims**

1. A dynamoelectric machine having a stator comprising a plurality of individual coils arranged in a parallel circuit and a rotor comprising a plurality of individual permanent magnets arranged to interact with the magnetic field produced upon activation of said coils, characterized in that the individual coils (16) are electrically connected in parallel circuit by a pair of common bus bars (18, 20).

2. The dynamoelectric machine claimed in claim 1, characterized in that the common bus bars are provided by a pair of disks of electro-conductive material between which the coils (16) are sandwiched, the coils (16) are cylindrical and are located in at least one circle substantially equally circumferentially spaced from each other with axes parallel to each other and to the axis of the disks, which circle is concentric with the disks (18, 20).

3. The dynamoelectric machine claimed in claim 2, characterized in that a plurality of circles of the coils (16) is provided concentric with the disks (18, 20) with the coils (16) in the circles being radially aligned to provide a plurality of radially-extending arrays of coils.

4. The dynamoelectric machine claimed in claim 3, characterized in that a corresponding number of circles of individual radially-aligned permanent magnets (26) is provided with each individual permanent magnet (26) having a polarity opposite to the radially-adjacent ones.

5. The dynamoelectric machine claimed in claim 4, characterized in that an even number of circles of coils (16) and of permanent magnets - (26) is employed whereby a plurality of magnetic circuits comprising a pair of radially-adjacent coils (16) and a pair of radially-aligned permanent magnets (26) is provided.

6. The dynamoelectric machine claimed in any one of claims 3 to 5, characterized in that the number of radially-directed arrays of permanent magnets (26) exceeds the number of radially-directed arrays of coils (16).

7. The dynamoelectric machine claimed in any one of claims 2 to 6 characterized in that a pair of rotors (22, 24) is provided on each axial side of the disks (18, 20).

8. The dynamoelectric machine claimed in any one of claims 2 to 6, characterized in that a single rotor (22) is provided on one axial side of the disks (18, 20).

9. The dynamoelectric machine claimed in any one of claims 1 to 8, characterized in that the rotor (22) comprises a plurality of radially-extending arms on which the permanent magnets are mounted.

10. The dynamoelectric machine claimed in any one of claims 1 to 9, characterized in that each permanent magnet (26) has a face towards said coil which is sloped in a direction away from its direction of motion, whereby the magnetic field of the magnet drops off quickly.

11. The dynamoelectric machine claimed in any one of claims 1 to 10, characterized in that at least one magnetically-activated device (12, 14) is provided in series with each of the coils (16) to activate the coil (16) and to reverse its polarity in response to the relative location of the permanent magnet (26) to the coil (16).

12. The dynamoelectric machine claimed in claim 11, characterized in that the magnetically-activated device is a Hall switch (12, 14).

13. The dynamoelectric machine claimed in claim 12, characterized in that a pair of Hall switches (12, 14) is provided in series with each coil (16), one (12) of the pairs of Hall switches is arranged on the upstream side of the coil (16) so as to be activated by a permanent magnet (26) moving towards the coil (16) to provide a polarity in the coil - (16) which is opposite to that of the permanent magnet (26), thereby attracting the magnet to the coil, and to be inactivated by the permanent magnet (26) when the magnet has moved past the one Hall switch (12) into substantial alignment with the coil (16), and the second (14) of the pair of Hall switches is arranged on the downstream side of the coil (16) so as to be activated by the permanent magnet (26) as it moves past alignment with the coil to provide a polarity in the coil (16) which is the same as that of the permanent magnet, thereby repulsing the magnet away from the coil.

14. The dynamoelectric machine claimed in 12, characterized in that one (12) Hall switch is provided in series with each coil (16) and arranged on the upstream side of the coil so as to be activated by a permanent magnet (26) moving towards the coil to provide a polarity in the coil which is opposite to that of the permanent magnet, thereby attracting the magnet (26) to the coil (16), and to be inactivated by the permanent magnet (26) when the magnet has moved past the Hall switch (12) into substantial alignment with the coil, and the coil is in circuit with a diode (30) so that, as said Hall switch is inactivated, the counter emf in the coil - (16) is discharged through the diode and reverses the polarity of the coil, thereby repulsing the permanent magnet.

15. The dynamoelectric machine claimed in any one of claims 1 to 14 operated as a motor.

FIG.1.

10

FIG.2.

10

## FIG.3a.

## FIG.3b.

FIG.3c.

26

N
S

12 VOLTS

GOLD PLATE

GOLD PLATE

26

N
S

FIG.3d.

N
S

12 VOLTS

GOLD PLATE

GOLD PLATE

N
S

FIG. 3e.

N
S

12 VOLTS

S
× × ×

S

⊖

S
× × ×

GOLD
PLATE

⊕

N

GOLD
PLATE

⊖

N
S

FIG. 3f.

N
S

12 VOLTS

S

S

⊖

S

GOLD
PLATE

⊕

N

GOLD
PLATE

⊖

N
S

GOLD
PLATE

Neu eingereicht / Newly filed
Nouvellement déposé

FIG. 3g.

12 VOLTS

GOLD PLATE

GOLD PLATE

FIG.4.

+12 VOLTS

18

GOLD

STEEL

GOLD

21

28

22

26

12

14

16

20

FIG. 5.

PULSE
VOLTAGE

+10
VOLTS

+5

MAGNETIC
FIELD AT
HALL
SWITCH

1000
GAUSS

0

500

On
(660)

−5

Off (200)

−10

O

22    STEEL ROTOR ⟶

MAGNETS

26

12

+12V

S

GOLD

18

HALL
SWITCH

Icemf

21

Diode
30

16

28

−V

STEEL

GOLD

SOFT
FERRITE

20

FIG.6.

| A ARRANGEMENT | B ARRANGEMENT |
|---|---|
| STATOR 8 & 48 | STATOR 16 & 80 |
| ROTOR 12 & 72 | ROTOR 12 & 72 |

ROTATION

ROTOR ARM

HALL SWITCHES

10

16

12

14

26

Coils

FIG.7.    STATOR ARRANGEMENTS

A
160 POLES

B
168 POLES

# FIG.8.

Coil Turns
(N)(÷1000)
&
Current (I)
(×10)

NI
Oersteds

Oersteds
(NI)

Current

Coil
Turns

AMERICAN WIRE GAUGE